Europäisches Patentamt

European Patent Office

Office européen des brevets

(19)

(11) **EP 0 722 095 B1**

(12) **FASCICULE DE BREVET EUROPEEN**

(45) Date de publication et mention
de la délivrance du brevet:
**11.04.2001 Bulletin 2001/15**

(51) Int Cl.⁷: **G01V 3/26**

(21) Numéro de dépôt: **96400040.0**

(22) Date de dépôt: **08.01.1996**

(54) **Détermination de la porosité et de la perméabilité d'une formation géologique à partir du phénomène d'électrofiltration**

Feststellung der Porosität und Permeabilität einer geologischen Formation, basiert auf das Elektrofiltrationsphänomen

Determination of the porosity and permeabilty of a geological formation based on the electrofiltration phenomenon

(84) Etats contractants désignés:
**DE GB**

(30) Priorité: **10.01.1995 FR 9500202**

(43) Date de publication de la demande:
**17.07.1996 Bulletin 1996/29**

(73) Titulaire: **COMMISSARIAT A L'ENERGIE ATOMIQUE**
**75015 Paris (FR)**

(72) Inventeurs:
• **Locatelli, Marcel**
**F-38330 Saint-Ismier (FR)**
• **Berthier, Jean**
**F-38240 Meylan (FR)**
• **Glenat, Henri**
**F-38700 Corenc (FR)**

(74) Mandataire: **Dubois-Chabert, Guy et al**
**BREVATOME**
**3, rue du Docteur Lanceraux**
**75008 Paris (FR)**

(56) Documents cités:
**WO-A-94/28441          US-A- 4 904 942**

• **GEOPHYSICS, vol. 56, no. 7, TULSA, pages 914-925, S.R. PRIDE ET AL. 'Electrokinetic dissipation induced by seismic waves'**

**Description**

La présente invention concerne un procédé de détermination de la porosité et de la perméabilité d'une formation géologique à partir du phénomène d'électrofiltration. Elle concerne également des dispositifs pour la mise en oeuvre de ce procédé.

Un problème majeur de l'exploitation des gisements pétrolifères est celui de la détermination de la quantité d'hydrocarbures que l'on peut extraire d'un gisement. L'ensemble des moyens de prospection et d'exploitation sont mis en oeuvre pour résoudre ce problème dont la solution n'est pas directe.

Il est connu de déterminer la perméabilité d'une formation géologique à partir d'un effet d'électrofiltration lié au passage d'un fluide dans un milieu perméable. Cette détermination se fait à partir du trou de sondage foré dans la formation géologique. L'effet d'électrofiltration dépend en particulier de la perméabilité de la roche constituant la formation et de la nature du ou des fluides qui y sont contenus. Dans un modèle approché, le potentiel U(t) dû au phénomène d'électrofiltration s'exprime par la relation suivante :

$$U_{(t)} = \Delta p_{(t)}.\varepsilon.\zeta/(4\pi. \mu. \sigma)$$

à condition que :

- l'écoulement du flux soit laminaire,
- les dimensions des pores soient supérieures à l'épaisseur de la double couche électrochimique,
- la conductance de surface soit inférieure à celle du fluide ;

avec :

- $\Delta p_{(t)}$ différence de pression fonction du temps t,
- $\varepsilon$ , $\mu$, $\sigma$ constante diélectrique, viscosité et conductivité du fluide respectivement,
- $\zeta$ potentiel zêta caractérisant l'interface solide-liquide.

D'autre part cette relation est valable pour des fluides de faibles conductivités, c'est-à-dire pour $\sigma$ <0,01 S/m. Dans le cas de conductivités plus élevées, ce qui arrive dans le domaine pétrolier surtout en présence de boue de forage à l'eau, le potentiel décroît et le courant d'électrofiltration associé croît.

A partir de la relation ci-dessus, plusieurs méthodes de détermination de la perméabilité d'une formation géologique ont été élaborées. Elles ont fait l'objet notamment des brevets US-A-3 599 085, US-A-4 427 944 et EP-B-43 768.

Ces méthodes sont basées sur la mesure du potentiel d'électrofiltration qui est directement proportionnel à la pression produite par des générateurs de pression. Or cette pression est très dépendante des contacts entre les générateurs de pression et la formation, contacts qui sont très perturbés notamment par les irrégularités existant au niveau des parois du trou de sondage. Il en résulte des imprécisions dans la mesure de la perméabilité de la formation géologique.

La présente invention a pour but de remédier à cet inconvénient en mettant en oeuvre un autre concept de mesure basé sur l'existence de phénomènes d'électrofiltration non linéaires. Ces phénomènes ont plusieurs origines qui reposent sur l'existence d'une double phase de fluides non miscibles et sur les déformations locales de la formation (déplacement de grains à courte ou longue distance) du fait de l'application d'une pression locale.

Ces phénomènes non linéaires peuvent se traduire par un phénomène critique, par exemple un phénomène de résonance de la propagation de l'onde de pression signalant une discontinuité importante. La valeur de la fréquence critique est liée aux caractéristiques de la formation et en particulier à la porosité et à la perméabilité. D'autre part, la perméabilité est fonction du diamètre des grains de la roche constituant la formation géologique, de la porosité et des paramètres du fluide comme la température, la viscosité et la masse spécifique. Connaissant la valeur de la fréquence critique on en déduit la valeur de la porosité puis la valeur de la perméabilité ou inversement.

La discontinuité est détectée à partir du suivi de l'évolution des grandeurs électriques liées à l'électrofiltration, tension ou courant.

L'article "Electrokinetic dissipation induced by seismic waves" de S. R. PRIDE et F. D. MORGAN, paru dans GEOPHYSICS, Vol. 56, N° 7, pages 914-925, 1991, divulgue qu'une variation de viscosité apparente peut être produite en fonction de la fréquence d'une onde acoustique excitatrice. Il indique l'existence d'une fréquence critique pour laquelle il existe une variation brutale de la viscosité apparente.

Les phénomènes d'électrofiltration non linéaires peuvent également être exploités d'une autre manière dans une configuration utilisant deux sources émettrices d'une onde de pression. La technique de mesure consiste alors à maintenir constante la fréquence du signal et à faire varier la différence de phase entre les sources en observant l'évolution du signal détecté, lequel passe par un extremum pour une différence de phase donnée, laquelle est reliée aux caractéristiques de la formation, en particulier la porosité et la perméabilité. On peut par exemple se servir d'abaques pour déterminer les valeurs de porosité et de perméabilité.

L'invention a donc pour objet un procédé de détermination de la porosité et/ou de la perméabilité d'une formation géologique susceptible de générer des phénomènes d'électrofiltration non linéaires, à partir d'un effet d'électrofiltration engendré dans la formation, comprenant des étapes consistant à :

- exciter mécaniquement et de manière répétitive le fluide de ladite formation pour propager une onde de pression de caractéristiques propres à engendrer un effet d'électrofiltration dans la formation,
- mesurer une grandeur représentative du potentiel d'électrofiltration engendré dans la formation par ladite onde de pression,

caractérisé en ce que :

- l'onde de pression étant produite par deux sources fournissant des ondes d'une même fréquence déterminée et permettant de canaliser le fluide excité, les ondes fournies par les deux sources étant déphasées entre elles et le déphasage entre les deux sources étant réglable, on détermine pour quelle valeur de déphasage la grandeur représentative du potentiel d'électrofiltration mesurée passe par un extremum,
- on détermine la porosité et/ou la perméabilité de la formation à partir de la relation qui les relie à ladite valeur de déphasage ou à partir d'abaques.

L'invention a également pour objet un dispositif pour la mise en oeuvre du procédé ci-dessus dans une formation géologique traversée par un trou de sondage, caractérisé en ce qu'il comprend :

- deux générateurs de pression disposés contre la paroi du trou de sondage pour constituer les deux dites sources,
- des moyens de mesure du déphasage entre les ondes fournies par les deux sources,
- des électrodes appliquées sur ladite paroi pour recueillir la grandeur représentative du potentiel d'électrofiltration,
- des moyens électroniques connectés auxdites électrodes pour mesurer ladite grandeur représentative du potentiel d'électrofiltration et suivre sa variation correspondante.

Dans ce cas également, les générateurs de pression peuvent être agencés pour se trouver dans un plan variable entre une position perpendiculaire et une position parallèle à l'axe du trou de sondage.

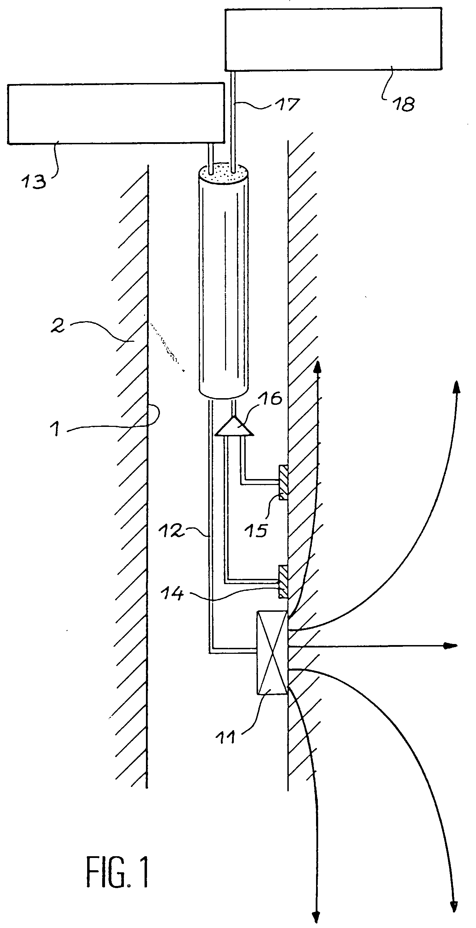

L'invention sera mieux comprise et d'autres avantages et particularités apparaîtront à la lecture de la description qui va suivre, donnée à titre d'exemple non limitatif, accompagnée des dessins annexés comprenant les figures 1 à 4 qui représentent autant de variantes de réalisation selon l'invention de dispositifs de détermination de la porosité et/ou de la perméabilité d'une formation géologique à partir d'un effet d'électrofiltration.

Le dispositif de la figure 1 permet une mesure de la porosité et/ou de la perméabilité par recherche de la fréquence de résonance de la propagation de l'onde de pression. Il est représenté en position dans le trou de sondage 1 foré dans la formation géologique 2 et comprend notamment un générateur de pression 11. Ce générateur de pression peut être un transducteur hydraulique tel que celui utilisé dans le brevet US-A-3 599 085 mentionné ci-dessus. Il peut s'agir d'un vibreur électromagnétique blindé électromagnétiquement qui a l'avantage d'être alimenté à une fréquence moitié de celle de la vibration (quelques centaines de hertz), ce qui permet de filtrer les signaux. Quel que soit le type de générateur utilisé, il est relié par un câble électrique 12 à une alimentation électrique basse fréquence 13 située en surface. La fréquence de cette alimentation est inférieure à quelques kHz.

Deux électrodes 14 et 15, par exemple en graphite, en platine ou en chlorure d'argent sont appliquées sur la paroi du trou de sondage. Pratiquement, la distance entre les électrodes et la distance entre le générateur et les électrodes peuvent être de 10 cm.

Les électrodes 14 et 15 sont reliées à un circuit électronique de mesure 16 situé dans le trou 1, à proximité des électrodes, donc dans un milieu à température élevée (de l'ordre de 175°C). Le circuit 16 est constitué d'un amplificateur de tension très bas niveau suivi d'une détection synchrone. Ce circuit est relié par un câble électrique 17 à un circuit électronique d'acquisition de données 18.

Les lignes fléchées représentées dans la formation géologique 2 figurent les directions de déplacement du fluide (ou des fluides) contenus dans la formation.

Les électrodes 14 et 15 recueillent une différence de potentiel électrique due au phénomène d'électrofiltration provoqué par le générateur 11 dans la formation géologique. Le signal recueilli, détecté et amplifié, permet de suivre, sous forme d'une tension, l'influence de la fréquence sur la valeur de ce signal.

On recherche, par variation de la fréquence de l'alimentation électrique 13, quelle est la fréquence pour laquelle le circuit 18 fournit une tension détectée maximale. Cette tension maximale correspond à la fréquence de résonance. Le calcul, par exemple à l'aide d'un calculateur, permet d'en déduire les valeurs de porosité et de perméabilité. On peut également se servir d'abaques constitués à partir d'expérimentations effectuées en laboratoire.

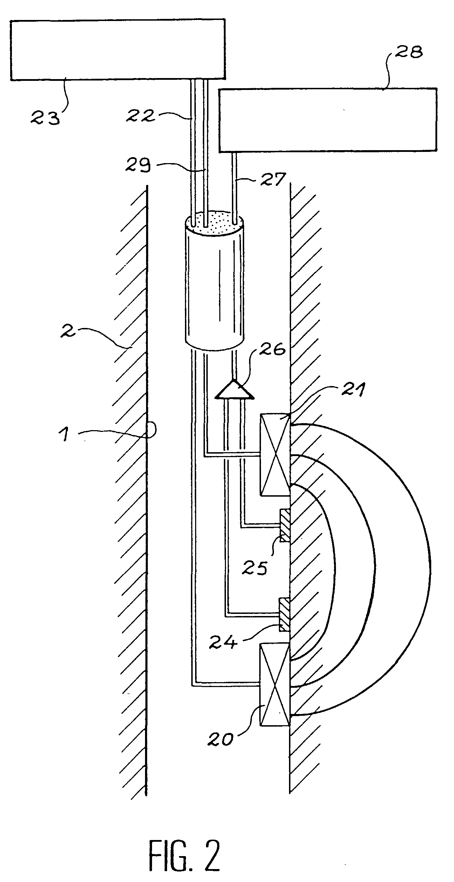

Le dispositif de la figure 2 met en oeuvre deux générateurs de pression 20 et 21, reliés par des câbles électriques 22 et 29, excités à la même fréquence mais à des phases différentes, contrôlées à partir d'une alimentation électrique basse fréquence 23 fournissant deux signaux à différence de phases contrôlable. Une différence de phase de 180° permet à l'un des générateurs de jouer le rôle de compresseur pendant une demi-période tandis que l'autre joue le rôle de pompe, et inversement pour la demi-période suivante. Cette technique permet de canaliser le flux de fluide (ou des fluides) en mouvement comme le figurent les signes dessinées dans la formation géologique.

Chaque électrode 24, 25 est disposée à proximité d'un générateur de pression. Comme précédemment, les électrodes sont reliées à un circuit électronique de mesure 26 situé dans le trou 1. Le circuit 26 est relié par un câble électrique 27 à un circuit électronique d'acquisition de données 28.

La recherche de la fréquence de résonance se fait comme précédemment, de même que le calcul de la porosité et de la perméabilité.

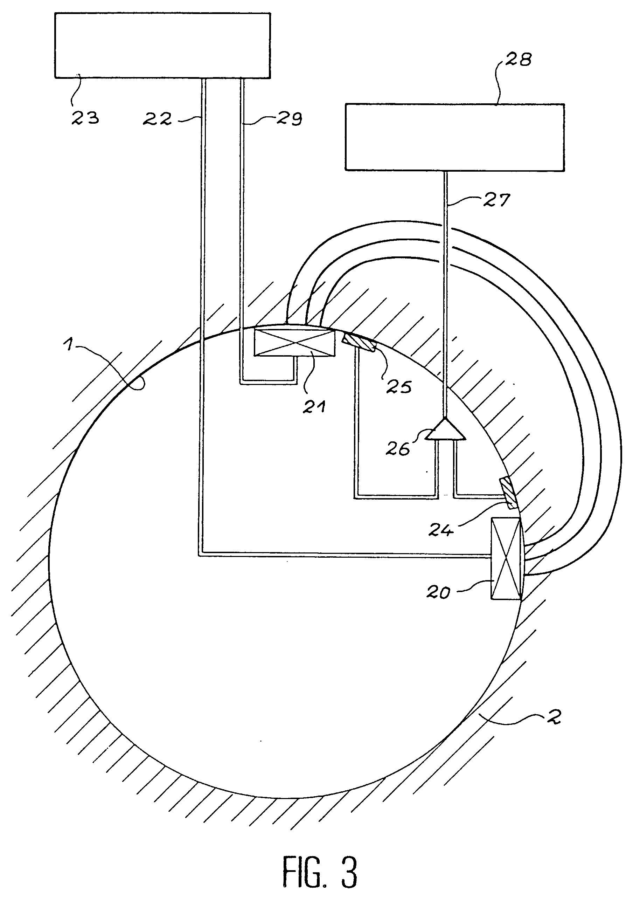

La figure 2 montre une disposition verticale des deux générateurs, impliquant une canalisation verticale du flux de fluide. En disposant les générateurs de pression 20 et 21 horizontalement, comme le montre la figure 3 où le trou de sondage 1 est vu en coupe transversale, on peut obtenir des valeurs de porosité et de perméabilité dans une direction horizontale.

Des mesures de porosité et de perméabilité selon des directions inclinées par rapport à la verticale sont également possibles en disposant les générateurs de pression en conséquence.

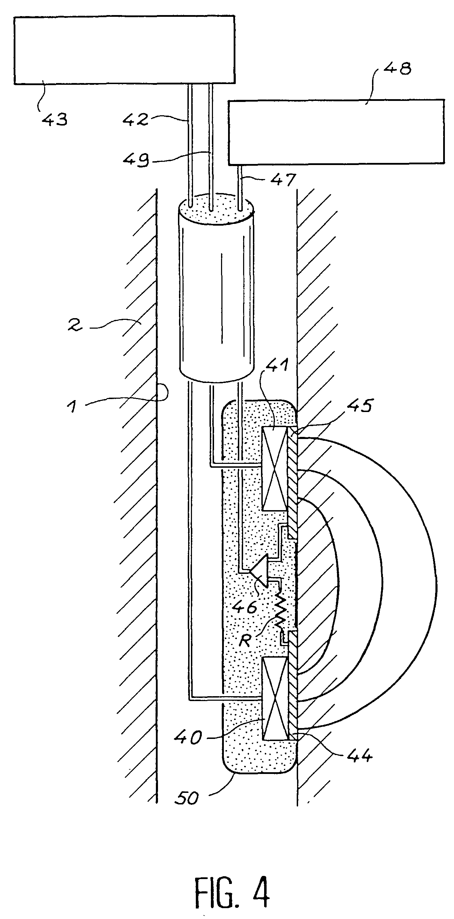

Dans la configuration utilisant deux générateurs de pression, il est aussi possible d'utiliser une détection de courant en fermant le circuit électrique par un ampèremètre et une résistance adaptée placés entre les électrodes. La figure 4 représente un exemple d'une telle réalisation.

La figure 4 montre que les électrodes 44 et 45 sont situées chacune entre le générateur de pression correspondant 40 ou 41 et la paroi du trou de sondage 1. Dans ce cas, les électrodes, par exemple en graphite, en chlorure d'argent ou en platine, sont poreuses afin de laisser le passage libre au fluide. Des câbles électriques 42 et 49 relient l'alimentation électrique 43 aux générateurs de pression 40 et 41, respectivement.

Les électrodes 44 et 45 sont reliées par un circuit électrique comprenant une résistance R et un circuit électronique de mesure 46. L'amplitude du courant traversant le circuit électrique reliant les électrodes 44 et 45 dépend en particulier de la valeur de la résistance placée dans ce circuit. Suivant la valeur de cette résistance, le circuit de mesure peut être constitué, comme le montre la figure 4, d'un ampèremètre bas niveau en série avec la résistance R, cet ampèremètre étant suivi d'une détection synchrone. Le circuit de mesure peut aussi être constitué, en fonction de la valeur de la résistance, d'un amplificateur de tension bas niveau branché aux bornes de la résistance R, ce circuit parallèle étant branché entre les électrodes 44 et 45 et l'amplificateur de tension étant suivi d'une détection synchrone comme pour la mesure de potentiel.

Une enveloppe diélectrique 50 renfermant les électrodes, les générateurs et le circuit électrique reliant les électrodes oblige le courant à passer par le circuit de mesure. L'enveloppe 50 ne doit cependant pas recouvrir la face des électrodes en contact avec la paroi du trou de sondage 1 pour permettre le passage du fluide au travers de ces électrodes.

La configuration utilisant deux générateurs de pression déphasés peut être aussi employée de la façon suivante. La fréquence de vibration des générateurs de pression est gardée constante et on fait varier la différence de phase entre les générateurs en observant l'évolution du signal détecté. Le déphasage est mesuré par un appareil approprié. On relève la valeur du déphasage correspondant à un extremum de la grandeur électrique détectée. Cette valeur du déphasage étant reliée aux caractéristiques de la formation, en particulier à la porosité et à la perméabilité, on peut en déduire par le calcul ou au moyen d'abaques les valeurs de la porosité et de la perméabilité de la formation.

**Revendications**

1. Procédé de détermination de la porosité et/ou de la perméabilité d'une formation géologique susceptible de générer des phénomènes d'électrofiltration non linéaires (2), à partir d'un effet d'électrofiltration engendré dans la formation, comprenant des étapes consistant à :

   - exciter mécaniquement et de manière répétitive le fluide de ladite formation pour propager une onde de pression de caractéristiques propres à engendrer un effet d'électrofiltration dans la formation,
   - mesurer une grandeur représentative du potentiel d'électrofiltration engendré dans la formation par ladite onde de pression,

   caractérisé en ce que :

   - l'onde de pression étant produite par deux sources fournissant des ondes d'une même fréquence déterminée et permettant de canaliser le fluide excité, les ondes fournies par les deux sources étant déphasées entre elles et le déphasage entre les deux sources étant réglable, on détermine pour quelle valeur de déphasage la grandeur représentative du potentiel d'électrofiltration mesurée passe par un extremum,
   - on détermine la porosité et/ou la perméabilité de la formation à partir de la relation qui les relie à ladite valeur de déphasage ou à partir d'abaques.

2. Dispositif pour la mise en oeuvre du procédé selon la revendication 1 dans une formation géologique (2) traversée par un trou de sondage (1), caractérisé en ce qu'il comprend :

   - deux générateurs de pression (20, 21 ; 40, 41) disposés contre la paroi du trou de sondage (1) pour constituer les deux dites sources,
   - des moyens de mesure du déphasage entre les ondes fournies par les deux sources,

- des électrodes (24, 25 ; 44, 45) appliquées sur ladite paroi pour recueillir la grandeur représentative du potentiel d'électrofiltration,
- des moyens électroniques (26, 28 ; 46, 48) connectés auxdites électrodes pour mesurer ladite grandeur représentative du potentiel d'électrofiltration et suivre sa variation correspondante.

**3.** Dispositif selon la revendication 2, caractérisé en ce que, ladite grandeur représentative du potentiel d'électrofiltration étant un courant électrique, les électrodes (44, 45) sont chacune intercalées entre un générateur de pression (40, 41) et la paroi du trou (1), les électrodes étant poreuses afin de laisser un libre passage au fluide excité.

**4.** Dispositif selon l'une des revendications 2 ou 3, caractérisé en ce que les générateurs de pression (20, 21) sont agencés pour se trouver dans un plan variable entre une position perpendiculaire et une position parallèle à l'axe du trou de sondage.


**Patentansprüche**

**1.** Verfahren zum Bestimmen der Porosität und/oder der Durchlässigkeit einer geologischen Formation, das in der Lage ist, nicht-lineare Elektrofiltrationsphänomene (2), ausgehend von einem in der Formation erzeugten Elektrofiltriereffekt, zu erzeugen, mit folgenden Schritten:

- mechanisches und wiederholtes Anregen des Fluids der Formation, um eine Druckwelle mit Eigenschaften, die geeignet sind, einen Elektrofiltriereffekt in der Formation zu erzeugen, auszulösen
- Messen einer Größe, die für das durch die Druckwelle in der Formation erzeugte Elektrofiltrier-Potential repräsentativ ist,

  dadurch gekennzeichnet, daß

- die Druckwelle durch zwei Quellen erzeugt wird, die Wellen einer gleichen, bestimmten Frequenz liefern und eine Kanalisierung des angeregten Fluids ermöglichen, die durch die beiden Quellen gelieferten Wellen gegeneinander phasenverschoben sind und die Phasenverschiebung zwischen den beiden Quellen regelbar ist, bestimmt wird, für welchen Wert der Phasenverschiebung die gemessene, für das Elektrofiltrier-Potential repräsentative Größe einen Extremwert durchläuft,
- die Porosität und/oder die Durchlässigkeit der Formation anhand der Beziehung, die sie mit dem Phasenverschiebungswert verbindet, oder anhand von Richtwerten bestimmt wird.

**2.** Vorrichtung zum Ausführen des Verfahrens gemäß Anspruch 1 in einer von einem Sondierungsloch (1) durchsetzten geologischen Formation (2), dadurch gekennzeichnet, daß sie umfaßt:

- zwei an der Wand des Sondierungslochs (1) angeordnete Druckerzeuger (20,21;40,41), um die beiden (Druck-) Quellen zu bilden,
- Einrichtungen zum Messen der Phasenverschiebung zwischen den von den beiden Quellen gelieferten Wellen,
- an der Wand angebrachte Elektroden (24,25; 44,45) zum Erfassen der für das Elektrofiltrier-Potential repräsentativen Größe,
- mit den Elektroden verbundene elektronische Einrichtungen (26,28;46,48) zum Messen der für das Elektrofiltrier-Potential repräsentativen Größe und zum Verfolgen ihrer entprechenden Variation.

**3.** Vorrichtung gemäß Anspruch 2, dadurch gekennzeichnet, daß die für das Elektrofiltrier-Potential repräsentative Größe ein elektrischer Strom ist und die Elektroden (44,45) jeweils zwischen einem Druckerzeuger (40,41) und der Wand des Lochs (1) eingefügt sind, wobei die Elektroden porös sind, um das angeregte Fluid frei durchlaufen zu lassen.

**4.** Vorrichtung gemäß einem der Ansprüche 2 oder 3, dadurch gekennzeichnet, daß die Druckerzeuger (40,41) so angeordnet sind, daß sie sich in einer Ebene befinden, die zwischen einer zur Achse des Sondierungslochs senkrechten Position und parallelen Position variabel ist.


**Claims**

**1.** Method for determining the porosity and/or permeability of a geological formation likely to generate non-linear electrofiltering phenomena (2) from an electrofiltering effect generated in the formation and including stages consisting of:

- mechanically and repeatedly exciting the fluid of said formation so as to propagate a pressure wave with suitable characteristics for generating an electrofiltering effect in the formation,
- measuring a variable representative of the electrofiltering potential generated in the formation by said pressure wave,

characterized in that:

- as the pressure wave is produced by two sources supplying waves of a given frequency and making it possible to channel the excited fluid and as the waves provided by the two sources are shifted with the phase jump between the two sources being adjustable, the variable representative of the electrofiltering potential measured is determined for this phase jump value and passes through an extremum.

2. Device for implementing the method according to claim 1 in a geological formation (2) traversed by a bore hole (1), characterized in that it includes:

   - the two pressure generators (20, 21; 40, 41) disposed against the wall of the bore hole (1) so as to constitute the two sources,
   - means for measuring the phase shift between the waves supplied by the two sources,
   - electrodes (24, 25; 44, 45) applied to said wall so as to collect said variable representative of the electrofiltering potential,
   - electronic means (26, 28; 46, 48) connected to said electrodes so as to measure said variable representative of the electrofiltering potential and follow its corresponding variation.

3. Device according to claim 2, characterized in that, as said variable representative of the electrofiltering potential is an electric current, the electrodes (44, 45) are each inserted between a pressure generator (40, 41) and the wall of the hole (1), the electrodes being porous so as to leave a free passage for the excited fluid.

4. Device according to claim 2 or 3, characterized in that the pressure generators (20, 21) are located inside a variable plane between a perpendicular position and a position parallel to the axis of the bore hole.

FIG. 1

FIG. 2

FIG. 3

FIG. 4